# EUROPEAN PATENT APPLICATION

(11) **EP 4 687 233 A1**
(43) Date of publication of application: **04.02.2026**
(21) Application number: 24192474.5
(22) Date of filing: 01.08.2024
(51) Int. Cl.: H01S 3/00, H01S 3/07, H01S 3/23, H05G 2/00

(54) **LASER SYSTEM, INSTALLATION FOR EXPOSING A SEMICONDUCTOR MATERIAL COATED WITH A PHOTO-SENSITIVE COATING WITH ULTRAVIOLET LIGHT, METHOD FOR GENERATING A LIGHT BEAM FOR GENERATING A PLASMA OF A TARGET MATERIAL THAT EMITS EUV LIGHT AND METHOD FOR PRODUCING MICROCHIPS OR SEMICONDUCTOR INTERMEDIATES FOR PRODUCING MICROCHIPS**

(71) Applicant: TRUMPF Lasersystems for Semiconductor Manufacturing SE, 71254 Ditzingen (DE); ASML Netherlands B.V., 5500 AH Veldhoven (NL)
(72) Inventor: SCHULZ, Joachim, 70839 Gerlingen (DE); ERHARD, Steffen, 70825 Korntal-Münchingen (DE); STRUYCKEN, Alexander Matthijs, 5500 AH Veldhoven (NL); FRÖHLICH, Benjamin, 70597 Stuttgart (DE); GAUDER, Patrick, 70563 Stuttgart (DE); SCHELLEKENS, Adrianus Johannes, 5500 AH Veldhoven (NL)
(74) Representative: Kutzenberger Wolff & Partner

(57) **Abstract**

The invention concerns laser system (18) in which a relay unit (64.1, 64.2) is configured such that a light beam (22) can be deflected at a first deflection element (74.1) out of a first relay plane (78.1) into a second relay plane (78.2) different from the first relay plane (78.1) and towards the second deflection element (74.2), wherein the relay planes (78.1, 78.2) extend essentially horizontally.

## Description

### BACKGROUND OF THE INVENTION

### 1. Field of the invention

The invention concerns a laser system for generating a light beam, in particular an EUV drive laser for generating an excitation light beam for generating an EUV light emitting plasma of a target material, comprising
a) a beam source arrangement for generating the light beam,
b) an amplifier arrangement having at least a first and a second optical amplifier for amplifying the light beam to an amplified light beam, each optical amplifier having a beam input at which the light beam can be input to the respective optical amplifier and a beam output at which the light beam can be output from the respective optical amplifier,
c) a relay arrangement which has at least one relay unit, the relay unit comprising a relay unit beam input and a relay unit beam output, wherein
   - the light beam can be transferred with the relay unit from the beam output of the first optical amplifier to the beam input of the second optical amplifier,
   - the beam output of the first optical amplifier and the relay unit beam input form a relay unit input interface and the beam input of the second optical amplifier and the relay unit beam output form a relay unit output interface,
   - a first deflection element is arranged at the relay unit input interface and a second deflection element is arranged at the relay unit output interface, by means of which deflection elements the light beam can be deflected.

The invention further concerns an installation for exposing a semiconductor material coated with a photosensitive coating with ultraviolet light.

In addition, the invention concerns a method for generating a light beam for generating a plasma of a target material that emits EUV light and a method for producing microchips or semiconductor intermediates for producing microchips,

### 2. State of the art

When manufacturing integrated circuits, so-called microchips, semiconductor substrates (hereinafter "wafers"), which are often monocrystalline, are coated with a coating in a comparatively early manufacturing step, which is then provided with a structuring in subsequent manufacturing steps. Such structuring acts as a masking in still further downstream manufacturing steps, which makes it possible to etch a functional layer underneath the coating, for example, to dope it with atoms (e.g. by ion implantation) or to introduce materials into the structuring (e.g. by LIGA and lift-off).

The aim of these manufacturing steps is, among other things, to produce transistors and conductive areas on the wafers that connect the transistors to each other. The structuring can be applied to the coating using various methods.

In photolithography, for example, the coating is designed as a photosensitive coating, in particular as a photoresist. Here, the photoresist is exposed to light of a certain wavelength, to which the photoresist is sensitive, in a certain pattern, which can influence the chemical properties of the exposed areas of the photoresist, for example the solubility to a developer solution. There are photoresists in which the exposed areas polymerize, i.e. in which the solubility of the exposed areas decreases in comparison to the unexposed areas (so-called negative resists). However, there are also photoresists in which the exposed areas become more soluble compared to the unexposed areas (so-called positive resists). In either case, the more soluble areas of the photoresist are removed using the developer solution to form the structure in the photoresist and thus mask the functional layer under the photoresist.

In order to introduce the specific pattern into the photoresist, a masking element (hereinafter "photomask") is usually arranged between the light source and the wafer, which, depending on the photoresist used (negative resist or positive resist), is designed as a negative or positive of the pattern to be formed on the photoresist.

In conventional photolithography, the photomask either lies directly on the photoresist or is arranged just above the photoresist, i.e. at a distance from it, whereby the photomask and the resulting structuring on the photoresist are in a 1:1 ratio to each other. As the photomasks can only be scaled to a finite size, the structure sizes are in this case limited to a few hundred nanometers. Due to the fact that smaller patterning enables microchips with significantly higher performance per unit area or volume (as this allows more transistors to be realized on a consistently small area), there is a general effort to reduce the size of the patterning to physical-absolute limits.

For this reason, projection exposure systems are generally used today, in which a focusing optic is usually arranged between the photomask and the photoresist, allowing the photomask to be imaged on the photoresist at a drastically reduced size. On the one hand, this means that the photomasks can be produced more cheaply, as the structures of the photomask do not have to be as small. On the other hand, significantly smaller structures can be imaged on the wafers compared to conventional photolithography. The photomask and the resulting structuring on the photoresist can then be present in a ratio of 5:1 or more to each other, for example. For its part, the photomask can be designed as an absorptive or reflective photomask.

Since the entire wafer cannot be covered by one single exposure step alone, the wafer is often exposed at a first exposure position by a so-called "step-and-repeat" process in prior art methods, moved a certain distance and then exposed again at a second exposure position. In these known methods, this is repeated until the wafer is largely covered with instances of the same structuring.

After the areas of the photoresist that are more soluble for the developer solution have been removed and the underlying functional layer has been treated, for example by etching, the photoresist is often removed from the functional layer by a process known as "stripping".

In the case of multilayered microchips, the projection exposure method described above can be carried out up to a hundred times for the same microchip.

### EUV light generation system and EUV generation

In addition to reducing the size of the photomask and using focusing optics, another way of reducing the size of the structuring on the wafers is to use light with a shorter wavelength for exposure.

In methods known from the prior art, extreme ultraviolet light (EUV light) with a wavelength in a range from about 8 to about 15 nm is generated for this purpose, with a main portion of the EUV light being at 13.5 nm, which is directed onto the photoresist by means of EUV projection optics and EUV focusing optics of the projection exposure system.

An EUV light generation system used for this purpose essentially comprises a laser system, in particular an EUV drive laser, by means of which at least one light beam, in particular an excitation light beam, can be generated, a target material generator and an EUV light generation chamber. Generally, a pulsed high-power laser is used as the EUV driver laser and a droplet generator is used as the target material generator, by means of which droplets of a target material can be shot into the EUV light generation chamber. In order to avoid damage to the system due to particle contamination, a high vacuum under a process gas atmosphere can prevail inside the EUV light generation chamber in applications known from the prior art, wherein the process gas in particular may comprise hydrogen (H₂) or helium (He). Such a EUV light generation system is typically part of an installation for exposing a semiconductor material coated with a photosensitive coating with EUV light.

The droplets generated by the droplet generator in methods known from the prior art may have a diameter in a range of approx. 10 µm to approx. 100 µm, but usually of approx. 20 µm to approx. 40 µm and more usually of 30 µm on average.

A tin (Sb) material is often used as the target material in methods known from the prior art. In addition to the tin (Sb) material, however, target materials comprising xenon (Xe), gold (Au) and/or lithium (Li) are also possible. In order to increase the amount of emitted EUV light, the droplets generated by the droplet generator can, for example, first be excited with a first excitation light beam, the so-called pre-pulse, and then with a second excitation light beam, the so-called main-pulse, whereby the two excitation light beams can be two independent light beams, but can also be generated by splitting a single light beam. In principle, the EUV light can only be generated by a single excitation light beam, so a second excitation light beam is not absolutely necessary. However, in methods known from the prior art, the use of a second excitation light beam significantly increases the so-called conversion efficiency, i.e. the ratio of laser power input to EUV power generated.

As the conversion efficiency depends on a large number of factors, for the sake of clarity the term "overall conversion efficiency" may be used hereinafter. It is thus clarified that the net ratio of the power of the excitation light beam to the power of the generated EUV light is addressed with the term "overall conversion efficiency".

The increase in conversion efficiency using more than one excitation light beam is due to the fact that excitation with the pre-pulse in these known methods causes preconditioning of the target material droplet. Currently, this preconditioning includes the formation of an approximately disk-like shape in the target material droplet due to the input of energy by the pre-pulse, whereby a surface of the target material droplet that can be excited by the second excitation light beam is comparatively enlarged. The main-pulse then strikes the preconditioned target material droplet, exciting it. In the known methods, this excitation comprises the generation of an ionized gas of the target material - if the target material is a tin (Sb) material, this generates a tin (Sb) plasma. This tin (Sb) plasma then in turn emits the EUV light required for the structuring in the photoresist.

In another known method, a third excitation light beam in the form of a so-called rarefaction pulse can be used for further preconditioning, for example, which strikes the target material droplet between the pre-pulse and the main-pulse. In this known method, the rarefaction pulse causes a dilution or increase in volume of the target material droplet formed into a disk-like shape by the pre-pulse to form a target material cloud, whereby the term "cloud" is not to be equated with a gaseous aggregate state or a vapor state of the target material, but rather is to be understood as an increase in volume of the target material. The use of such rarefaction pulse further increases the overall conversion efficiency.

The rarefaction pulse can be generated by splitting the first excitation light beam into the pre-pulse and the rarefaction pulse. However, it is also possible to use a separate beam source for the rarefaction pulse or even to split a single excitation light beam into the pre-pulse, the rarefaction pulse and the main-pulse. In addition, it is also possible that the rarefaction pulse is designed as a section of the main-pulse that precedes a main section of the main-pulse in terms of time and can be temporally delimited from the main section of the main-pulse with regard to the intensity distribution over time. In this case, it is often referred to as a "pedestal" for the rarefaction pulse.

EUV drive lasers in which more than three excitation light beams are used to excite the target material and generate EUV light are also possible.

In each of the above cases, the main-pulse hits the target material droplet with a power in the range of 20 kW to 50 kW.

### EUV drive laser

Laser systems and in particular EUV drive lasers known from the prior art may have a beam source arrangement, an amplifier arrangement with at least a first and a second optical amplifier and a relay arrangement with at least one relay unit.

The beam source arrangement may comprise at least one beam source that can generate a light beam, in particular an excitation light beam, which is then - at a certain point in the optical path - amplified by the optical amplifiers into an amplified light beam, this certain point preferably being located in a beam propagation direction behind the amplifier arrangement or at an output of a last optical amplifier in the beam propagation direction.

However, in case of exposure of semiconductor intermediates with EUV light, where more than one light beam is used to generate the EUV light in methods known in the prior art, there may be individual beam sources for each excitation light beam (pre-pulse, rarefaction pulse and main-pulse), i.e. a pre-pulse beam source, a rarefaction pulse beam source and a main-pulse beam source.

In the known methods, the term "single pulse" refers to a light beam that has only a comparatively short duration and thus a start time and an end time, may be part of a plurality of temporally consecutive short light beams of the same type (pulse sequence) and is generated by a pulsed laser. The duration of the single pulses can be in the micro-, nano-, pico- or femtosecond range. Lasers operated in continuous wave (CW) mode are to be distinguished from pulsed lasers. In this respect, the light beam, in particular the excitation light beam, and in case of the EUV technological field, the pre-pulse, the rarefaction pulse and/or the main-pulse can be thus constituted of a short single pulse, a pulse sequence or a plurality of consecutive and distinct or equal pulse sequences.

If in this case two, three or more individual beam sources are used to generate at least two excitation light beams or the pre-pulse, the rarefaction pulse and/or the main-pulse, respectively, these can generate the two or the plurality of excitation light beams with the same or different wavelengths and the same or different intensities, modes, beam caustics and/or polarization, or the excitation light beams can impinge on the target material droplet with the same or different wavelengths and the same or different intensities, modes, beam caustics and/or polarization.

A solid-state laser is often used as the pre-pulse beam source for the pre-pulse in conventional EUV drive lasers. Such a known solid-state laser generates the pre-pulse with a wavelength of about 1 µm. A solid-state laser can also be used as a rarefaction pulse beam source, which preferably also has a wavelength of about 1 µm, different from the pre-pulse, for example for metrological purposes. However, the beam source for the pre-pulse may also be a COz-based oscillator which generates the pre-pulse with a wavelength of about 10 µm.

A CO₂ laser is often used as the main-pulse beam source for the main-pulse, which generates the main-pulse with a wavelength of about 10.6 µm. In modern EUV drive lasers, however, a solid-state laser can also be used as the beam source for the main-pulse. Such solid-state lasers as the main-pulse beam source generate an excitation light beam with a wavelength in the range of approx. 1.7 to approx. 2.3 µm.

### Problem from the state of the art

In areas of application of such laser systems known from the state of the art, for example in the generation of EUV light for exposing a semiconductor material coated with a photosensitive coating, in particular for the production of microchips, one requirement of the laser system is to generate a particularly positionally stable light beam. This means that the light beam must hit a designated target impact area particularly reliably over a certain period of time. In other words, an actual impact area should preferably deviate as little as possible from the target impact area in a certain period of time.

However, similar requirements exist not only in the field of microchip production, but also, for example, in the technological field of laser-mediated nuclear fusion or material processing such as laser cutting.

A disadvantage of laser systems known from the state of the art is that the positional stability of the light beam does not adequately meet the requirements. In particular, due to thermal stresses within the laser system, which can arise due to absorption of the light beam, for example at optical elements within the beam path, the laser system may deform, which may also change a beam path through the laser system and thus the actual impact area can deviate too much from the intended target impact area. In particular in the case of an EUV drive laser or a laser for use in laser-mediated nuclear fusion, this may, in the worst case, lead to the light beam missing its target entirely, which may in turn lead to drastically reduced efficiency, irreparable damages to surrounding system components, the laser system itself or even personal injury.

### SUMMARY OF THE INVENTION

The object of the invention is therefore to provide a laser system described in the outset, which solves the above-mentioned problem of the prior art. According to the invention, this object is solved by the laser system mentioned in the outset, in which
d) the relay unit is configured such that the light beam can be deflected at the first deflection element out of a first relay plane into a second relay plane different from the first relay plane and towards the second deflection element, wherein the relay planes extend essentially horizontally.

Intensive research regarding the positional stability of the light beam with respect to the target impact area has surprisingly shown that a laser system in which the relay unit is configured such that the light beam can be deflected at the first deflection element out of a first relay plane into a second relay plane different from the first relay plane and towards the second deflection element, wherein the relay planes extend essentially horizontally, is significantly more reliable in terms of the positional stability of the light beam than laser systems known from the prior art.

This is due to the fact that in such a laser system the total number of deflection elements in the laser system may be comparatively reduced. Such a reduction in deflection elements within the overall laser system also reduces the number of surfaces at which the light beam may be partially absorbed and thus at which thermal stresses may be introduced into the laser system. In other words, at least one deflection element per relay unit can be dispensed with if a relay unit beam path for the light beam within the relay unit is at least in sections inclined or slanted (when viewed in a horizontal direction and perpendicular to a main axis of the laser system), namely from the first, essentially horizontally extending relay plane to the second, essentially horizontally extending relay plane. If more than two optical amplifiers and correspondingly more than one relay unit are present, deflection elements can be dispensed with in the laser system according to the invention, at least in accordance with the number of relay units present.

In addition, a laser system according to the invention has the further advantage that the first and the second optical amplifier, which are optically connected to one another by the relay unit, can potentially be essentially identical in construction and thus the inputs and outputs of the optical amplifiers can be aligned with one another in a direct line of sight.

Preferably the first relay plane passes through a deflection region of the first deflection element and the second relay plane passes through a deflection region of the second deflection element, wherein the light beam is deflected at the deflection regions when the laser system is in active operation.

It is favorable, if a beam path, along which the light beam propagates within the laser system, runs at least in sections in the first relay plane and in the second relay plane.

It is further advantageous if the first relay plane and the second relay plane are spaced apart from one another in the vertical direction.

Preferably, a plane of incidence of the light beam regarding the first deflection element and/or a plane of incidence of the light beam regarding the second deflection element define an angle with the first relay plane or with the second relay plane, respectively, which is different from 90°.

Favorably, a relay unit beam path, along which the light beam propagates within the relay unit, extends from the relay unit input interface to the relay unit output interface, in particular from the first deflection element to the second deflection element, in particular directly from the first deflection element to the second deflection element, which relay unit beam path defines an angle with the first relay plane and/or with the second relay plane which is different from 90°. In particular, this angle may be in the range of 5° to 20°, advantageously in the range of 7° to 17°, and even more advantageously in the range of 8° to 15°.

In this case, it is also advantageous if exactly one deflection element is arranged in the relay unit input interface and/or the relay unit output interface and the light beam can be directed directly from the first deflection element to the second deflection element. Furthermore, it is advantageous if the light beam can be directed directly from the second deflection element to an amplifier deflection element within the second optical amplifier.

In this case, "directly" means that there a no other optical elements in the beam path of the light beam, with which the light beam may be deflected in a way that a main propagation direction of the light beam changes.

It is favorable if projections of an incident beam path towards the first deflection element and of the relay unit beam path or of an output beam path away from the second deflection element and of the relay unit beam path onto the first relay plane or the second relay plane define an angle which is essentially 90°. In other words, it is advantageous if the incident beam path towards the first deflection element and the relay unit beam path and/or the output beam path away from the second deflection element and the relay unit beam path define an angle which is substantially 90° when viewed in a perpendicular direction towards the first and/or second relay plane.

In case of the optical amplifiers it is advantageous if each optical amplifier has a first beam plane and a second beam plane different from the first beam plane within which beam planes the beam path runs at least in sections and within which the light beam can be deflected at least twice by means of deflection elements provided therefore. Furthermore, it is also advantageous if the beam planes of the optical amplifiers are optically connected to each other and the light beam can pass through the optical amplifier in a forward direction and in a reverse direction.

Preferably, the first relay plane, the second relay plane, the first beam plane and/or the second beam plane extend plane-parallel to one another.

Advantageously, the first relay plane and the second beam plane of the first optical amplifier and/or the second relay plane and the first beam plane of the second optical amplifier are identical.

Laser system according to one of the preceding claims, characterized in that the amplifier arrangement comprises at least a third optical amplifier and the relay arrangement comprises at least a second relay unit, wherein the light beam can be transferred with the first relay unit from the beam output of the first optical amplifier to the beam input of the second optical amplifier and with the second relay unit from the beam output of the second optical amplifier to the beam input of the third optical amplifier.

In this case, it is advantageous if the beam path for the light beam from the input of the first optical amplifier to the output of the second optical amplifier is formed in a main direction in such a way that the light beam passes through the optical amplifiers in a specific sequence, wherein the sequence is: first beam plane of the first optical amplifier, second beam plane of the first optical amplifier, relay unit input interface, relay unit output interface, first beam plane of the second optical amplifier and second beam plane of the second optical amplifier.

According to a further aspect of the invention, the object mentioned in the outset is also solved by an installation for exposing a semiconductor material coated with a photosensitive coating with ultraviolet light, in particular EUV light, characterized in that the system has a laser system with at least some or all of the features mentioned above with regard to the laser system, a focusing unit, a beam transport system and a target material generator, the laser system being arranged in a first installation region and the focusing unit and the target material generator being arranged in a second installation region, wherein the light beam can be transported from the laser system to the focusing unit by means of the beam transport system.

According to a yet other aspect of the invention, the object mentioned in the outset is also solved by a method for generating a light beam for generating a plasma of a target material that emits EUV light, characterized in that a laser system with at least some or all of the features mentioned above with regard to the laser system is used, in particular for generating the light beam for generating the plasma of the target material.

According to yet another aspect of the invention, the object mentioned in the outset is also solved by a method for producing microchips or semiconductor intermediates for producing microchips, comprising the following steps:
a) providing a laser system with at least some or all of the features mentioned above with regard to the laser system, a beam transport system, a focusing unit and a target material generator;
b) generating a light beam by means of the laser system and units of a target material that can be individually excited with the light beam by means of the target material generator;
c) transporting the light beam by means of the beam transport system from the laser system to the focusing unit and directing the light beam onto the units of the target material by means of the focusing unit and thereby generating a plasma of the target material that emits EUV light;
d) exposing a semiconductor material coated with a photosensitive coating to the EUV light emitted by the plasma of the target material.

### List of figures

In the following, embodiments of the invention are explained in more detail with reference to the figures. These figures show the following:
- Fig. 1: shows, according to an aspect of the invention, a section of a stylized embodiment of an installation for exposing a semiconductor material coated with a photosensitive coating with ultraviolet light, in this case EUV light, wherein an embodiment of a laser system according to a further aspect of the invention, a target material generator, a focusing unit and a beam transport system are additionally shown;
- Fig. 2: shows the embodiment of the installation according to Fig. 1, wherein a projection exposure arrangement, which includes the target material generator, an EUV light collector optics, a projection optics and a focusing optics, is shown in more detail compared to Fig. 1;
- Fig. 3: shows a schematic beam path for the light beam through an amplifier arrangement of the laser system according to the invention, wherein the beam path comprises relay unit beam paths, and deflection elements arranged within a relay unit;
- Fig. 4: shows a section of the beam path according to Fig. 3, with Fig. 4 additionally showing schematic outlines of a first optical amplifier and a second optical amplifier as well as a first relay plane and a second relay plane different from the first relay level;
- Fig. 5: shows a schematic view of the relay unit in a direction along the relay planes, in which a first deflection element, a second deflection element, the first relay plane, the second relay plane and schematically the outlines of the first and the second optical amplifiers are shown;
- Fig. 6: shows a further schematic view of the relay unit in a direction perpendicular to the relay planes, from which an output of the first optical amplifier, an input of the second optical amplifier, a relay unit input interface, a relay unit output interface and the relay planes emerge;
- Fig. 7: shows a schematic perspective view of the first deflection element, from which angles alpha, beta and gamma emerge and the course of an incidence plane in relation to the first relay plane is shown.

The invention is of course not limited to the embodiments shown. The embodiments shown in the figures merely represent specific examples of the invention. Within the scope of his expertise, it is also possible for the person skilled in the art to recognize embodiments of the invention which are not explicitly shown.

### List of reference numerals

- 10: installation
- 12: semiconductor material
- 14: photosensitive coating
- 16: EUV light
- 18: laser system
- 20: beam source arrangement
- 22: light beam
- 24: amplifier arrangement
- 26.1: first optical amplifier
- 26.2: second optical amplifier
- 28: amplified light beam
- 30: third optical amplifier
- 32: fourth optical amplifier
- 34: focusing unit
- 36: beam transport system
- 38: target material generator
- 40: excitation volume
- 42: unit
- 43: target material plasma
- 44: EUV collector optics
- 46: projection exposure arrangement
- 48.1: first collimation element
- 48.2: second collimation element
- 50.1: first focusing element
- 50.2: second focusing element
- 52: projection optics
- 54: masking
- 56: beam path
- 58: beam input
- 60: beam output
- 62: relay arrangement
- 64.1: first relay unit
- 64.2: second relay unit
- 66: relay unit beam input
- 68: relay unit beam output
- 70: relay unit input interface
- 72: relay unit output interface
- 74.1: first deflection element
- 74.2: second deflection element
- 76.1: first beam plane
- 76.2: second beam plane
- 78.1: first relay plane
- 78.2: second relay plane
- 79: vertical direction
- 80: relay unit beam path
- 82: horizontal direction
- 84: main axis
- 86: deflection region
- 88: incident beam path
- 90: output beam path
- 92: plane of incidence
- α: angle between relay unit beam path and relay planes
- β: angle between relay unit beam path and incident and/or output beam paths
- γ: angle between plane of incidence and first and second relay planes

### DESCRIPTION OF PREFERRED EMBODIMENTS

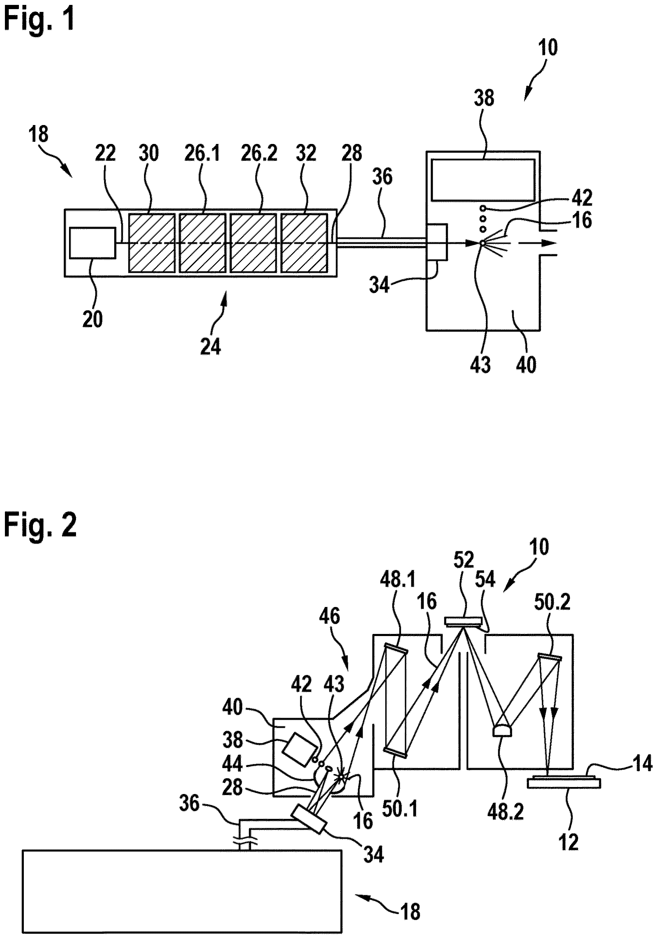

In **Figs. 1** and **2****,** an installation for exposing a semiconductor material **12** with a photosensitive coating **14** to ultraviolet light, which in the present case is realized as EUV light **16,** is shown with a total of **10.**

The installation 10 comprises a laser system **18,** which in the present embodiment is designed as an EUV driver laser. However, the laser system 18 can just as well be designed as a material processing laser, e.g. as a cutting laser, or as a laser for use in laser-mediated nuclear fusion. In any case, the laser system 18, hereinafter exemplarily referred to as EUV driver laser, comprises a beam source arrangement **20** for generating a light beam **22,** which in the present embodiment is designed as an excitation light beam.

In addition, the EUV drive laser 18 has an amplifier arrangement **24** having at least a first optical amplifier **26.1** and a second optical amplifier **26.2.** The amplifier arrangement 24 is configured such as to be able to amplify the light beam 22 to an amplified light beam **28,** here exemplarily to an amplified excitation light beam. In the present embodiment of the laser system 18, the amplifier arrangement 24 has additionally a third optical amplifier **30** and a fourth optical amplifier **32,** the third optical amplifier 30 being designed as an end amplifier of the EUV drive laser 18 and being arranged along a propagation direction of the light beam 22, which is not specifically provided with a reference sign, downstream of the second optical amplifier 26.2. The fourth optical amplifier 32 is designed as a start amplifier of the EUV drive laser 18 and is arranged in the propagation direction of the light beam 22 upstream of the first optical amplifier 26.1.

In embodiments of the EUV drive laser 18 not explicitly shown, the amplifier arrangement may have only the first and second optical amplifiers 26.1, 26.2 or more than four optical amplifiers.

In addition to the laser system 18, the installation 10 has a focusing unit **34,** a beam transport system **36** and a target material generator **38.** In the present embodiment of the installation 10, an excitation volume **40** is also present.

The amplified excitation light beam 28 can be transported or guided towards the focusing unit 34 by means of the beam transport system 36. In the present embodiment of the installation 10, the beam transport system 36 essentially only forms a housing for the amplified excitation light beam 28 in order to keep external influences on the amplified excitation light beam 28 and possible personal injuries as low as possible or even to eliminate them completely.

In embodiments not specifically shown, the beam transport system 36 can be configured such as to transport the amplified excitation light beam 28 from a first installation area to a second installation area, which installation areas are not explicitly provided with a reference sign, wherein the laser system 18 can be arranged in the first installation area and the focusing unit 34 and the target material generator 38 can be arranged in the second installation area. The first installation area can, for example, be a lower installation level, e.g. a basement. The second installation area can be arranged higher than the first installation area, e.g. at ground level.

By means of the focusing unit 34, the light beam 22, which leaves the end amplifier 32 as an amplified light beam 28 or, in this case, an amplified excitation light beam, after amplification by means of the optical amplifiers 26.1, 26.2, 30, 32, can be focused into the excitation volume 40.

The target material generator 38 is in the present embodiment of the installation 10 designed to generate units **42** of a target material and to fire these units 42 under high pressure into the excitation volume 40, where the units 42 can then be individually excited by means of the amplified excitation light beam 28. The excitation of the units 42 by means of the amplified excitation light beam 28 causes an ionization and a vaporization of the target material due to a comparatively extremely high energy input into the corresponding units 42, whereby a target material plasma **43** is generated.

In the present embodiment, a secondary radiation in the form of ultraviolet light is emitted as a byproduct of the generation of the target material plasma 43 and/or by the target material plasma 43 itself, which is exemplarily realized in the form of EUV light 16 with an average wavelength of approximately 13.5 nm. In other embodiments not specifically shown, this may also be another secondary radiation such as X-rays.

As can be seen from **Fig. 2****,** the EUV light 16 is emitted in all spatial directions from the excited units 42 of the target material. By means of an EUV collector optics **44,** which in the present case is arranged within the excitation volume 40, a portion of the emitted EUV light 16, which is emitted along direction vectors each having a directional component extending essentially opposite to a designated propagation direction for the EUV light 16, is collected and focused in such a way that said portion of the EUV light 16 propagates along said designated propagation direction for the EUV light 16.

Within a projection exposure arrangement **46,** which in the present case also includes the target material generator 38, the excitation volume 40 and the EUV collector optics 44, the EUV light 16 is collimated in an exemplary embodiment by means of a first collimation element **48.1** and directed onto a first focusing element **50.1,** which in turn focuses the EUV light 16 onto a projection optics **52.** After the projection optics 52, the EUV light 16 in the present exemplary embodiment reaches a second collimation element **48.2** and from there onto a second focusing element **50.2.** By means of the second focusing element 50.2, the EUV light 16 is then directed onto the photosensitive coating 14 of the semiconductor material 12, where a structuring is then introduced into the photosensitive coating in accordance with a masking 54 comprised by the projection optics 52.

In the present case, the collimation elements 48.1 and 48.2 as well as the focusing elements 50.1 and 50.2 are designed as reflective optical elements in the form of mirrors, since the EUV light 16 would be almost completely absorbed in lens elements. If a different secondary radiation is to be generated, the collimation and focusing elements 48.1, 48.2; 50.1, 50.2 may of course be designed to suit the corresponding requirements.

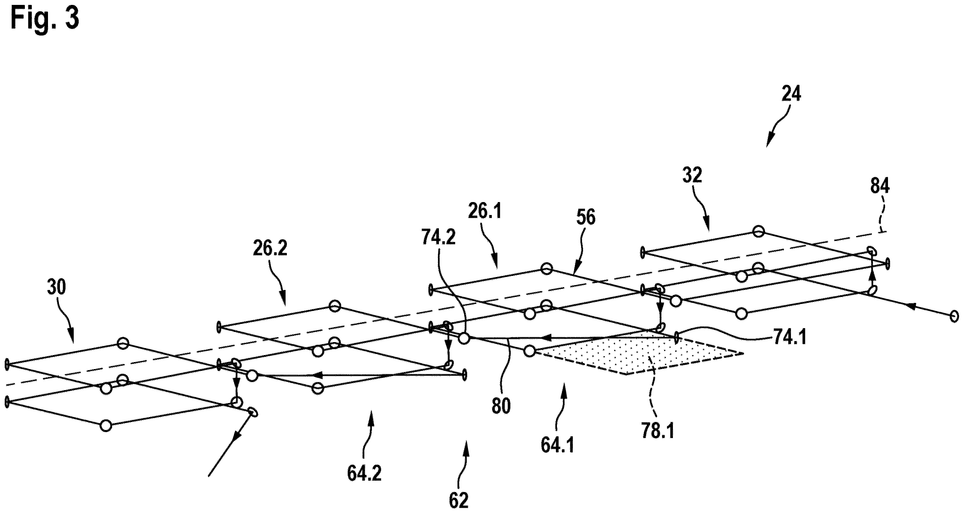

**Figs. 3** to **6** schematically show a beam path **56** or parts of the beam path 56 for the light beam 22 through the amplifier arrangement 24.

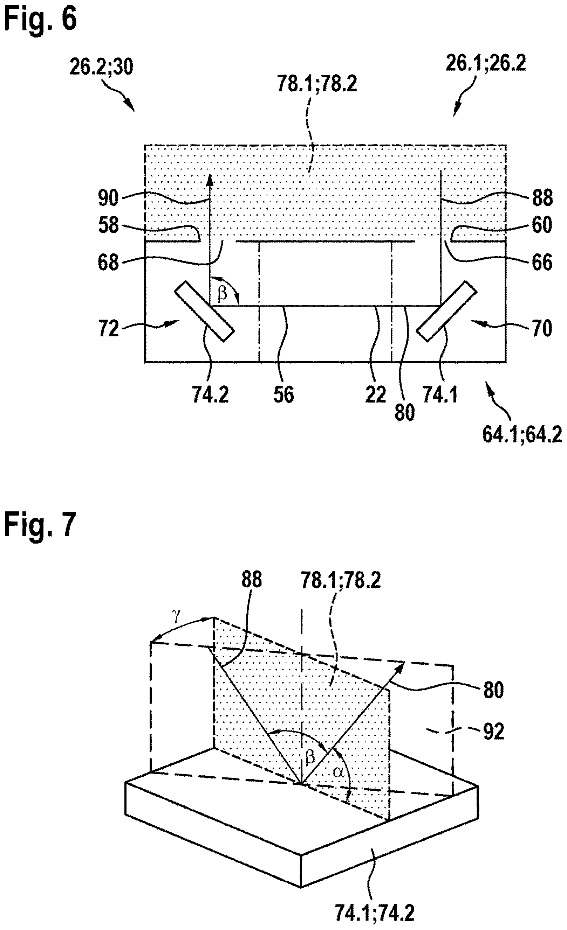

The optical amplifiers 26.1, 26.2, 30, 32 each have a beam input **58,** at which the light beam 22 can be input to the optical amplifier 26.1, 26.2, 30, 32, and a beam output **60,** at which the light beam 22 can be output from the respective optical amplifier 26.1, 26.2, 30, 32. The beam input 58 and the beam output 60 are only shown in Fig. 6.

The EUV drive laser 18 additionally comprises a relay arrangement **62,** which has at least one relay unit **64.** In the present embodiment of the amplifier arrangement 24, however, the relay arrangement 62 has two relay units **64.1** and **64.2,** each of which has a relay unit beam inlet **66** and a relay unit beam outlet **68** (only shown in Fig. 6). By means of the relay units 64.1, 64.2, the light beam 22 can be transferred from one optical amplifier to a next optical amplifier. In the present embodiment, the first relay unit 64.1 optically connects the first optical amplifier 26.1 to the second optical amplifier 26.2. Further to that, the second relay unit 64.2 optically connects the second optical amplifier 26.2 to the third optical amplifier 30. In embodiments not specifically shown, the relay units can also be arranged between further amplifiers than those shown in the present embodiment. In further embodiments not explicitly shown, it is of course possible that the amplifier arrangement 24 only comprises a first optical amplifier 26.1 and a second optical amplifier 26.2 and therefore also only one relay unit 64.1 optically connecting the first and the second optical amplifier 26.1, 26.2.

In the present embodiment, the beam outlet 60 of the first or second optical amplifier 26.1; 26.2 and the relay unit beam inlet 66 form a relay unit input interface **70** and the beam inlet 58 of the second or third optical amplifier 26.2; 30 and the relay unit beam outlet 68 form a relay unit output interface **72.** In the present embodiment, a first deflection element **74.1** is arranged at the relay unit input interface 70 and a second deflection element **74.2** is arranged at the relay unit output interface 72. By means of the deflection elements 74.1, 74.2, the excitation light beam 22 can be deflected.

In the present case, deflection is understood to mean changing a propagation direction by means of refraction, diffraction or reflection, with the deflection elements 74.1, 74.2 being designed in the present embodiment, for example, as reflective deflection elements 74.1, 74.2.

The optical amplifiers 26.1, 26.2, 30, 32 each have a first beam plane **76.1** and a second beam plane **76.2,** which run essentially parallel to each other and are spaced apart from each other. The beam path 56 runs at least in sections within each beam plane 76.1, 76.2. In the present embodiment, the beam planes 76.1, 76.2 are optically connected to one another in such a way that the excitation light beam 22 is deflected from the first beam plane 76.1 into the second beam plane 76.2 after three deflections at deflection elements not specifically designated via another deflection element also not specifically designated with a reference sign.

In the present case, the respective first beam plane 76.1 of an optical amplifier 26.1, 26.2, 30, 32 is defined in each case by the beam inlet 58 of the optical amplifier 26.1, 26.2, 30, 32.

The relay units 64.1, 64.2 are configured such that the excitation light beam 22 can be deflected at the first deflection element 74.1 out of a first relay plane **78.1** into a second relay plane **78.2** different from the first relay plane 78.1 and towards the second deflection element 74.2, wherein the relay planes 78.1, 78.2 extend essentially horizontally and are spaced apart from one another in a vertical direction **79.**

The inventors have surprisingly discovered that such a laser system 18 in which the relay units 64.1, 64.2 are configured such that the excitation light beam 22 can be deflected at the first deflection element 74.1 out of a first relay plane 78.1 into a second relay plane 78.2 different from the first relay plane 78.1 and towards the second deflection element 74.2, wherein the relay planes 78.1, 78.2 extend essentially horizontally, is significantly more reliable in terms of the positional stability of the light beam 22 than laser systems 18 known from the prior art.

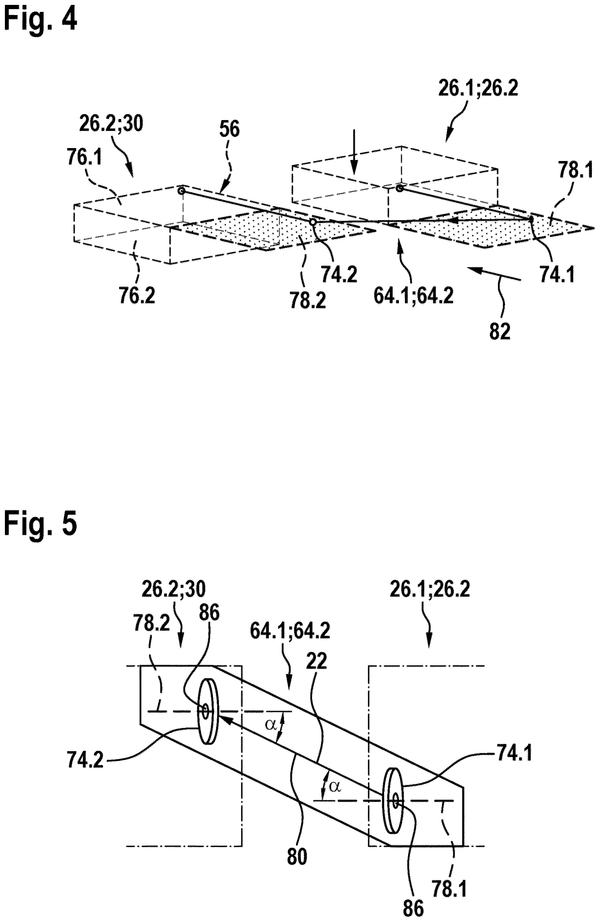

This is due to the fact that in such a laser system 18 the total number of deflection elements in the laser system 18 may be comparatively reduced. Such a reduction in deflection elements within the overall laser system 18 also reduces the number of surfaces at which the light beam may be partially absorbed and thus at which thermal stresses may be introduced into the laser system 18. In other words, at least one deflection element per relay unit 64.1, 64.2 can be dispensed with if a relay unit beam path **80** for the light beam 22 within the relay units 64.1, 64.2 is at least in sections inclined or slanted (when viewed in a horizontal direction **82** shown in Fig. 4 and perpendicular to a main axis **84** of the laser system), namely from the first, essentially horizontally extending relay plane 78.1 to the second, essentially horizontally extending relay plane 78.2.

In **Fig. 5** it is shown that the first relay plane 78.1 passes through a deflection region **86** of the first deflection element 74.1 and the second relay plane 78.2 passes through a deflection region 86 of the second deflection element 74.2, wherein the light beam 22 is deflected at the deflection regions 86 when the EUV drive laser 18 is in active operation.

In the present embodiment, the beam path 56 runs accordingly at least in sections in the first relay plane 78.1 and the second relay plane 78.2.

The relay unit beam path 80, along which the light beam 22 propagates within the relay units 64.1, 64.2, in each case extends from respective the relay unit input interface 70 to the respective relay unit output interface 72, in the present embodiment from the first deflection element 74.1 directly to the second deflection element 74.2, which relay unit beam path 80 defines an angle **α** with the first relay plane 78.1 and with the second relay plane 78.2 which is different from 90°. In other words, the relay unit beam path 80 is tilted with regard to the relay planes 78.1, 78.2.

In **Fig. 6****,** it is shown that projections of an incident beam path **88** towards the first deflection element 74.1 and of the relay unit beam path 80 or of an output beam path **90** away from the second deflection element 74.2 and of the relay unit beam path 80 onto the first relay plane 78.1 or the second relay plane 78.2 define an angle **β** which is essentially 90°. In other words, when viewed from the vertical direction 79, the relay unit beam path 80 and both the incident beam path 88 and the output beam path 90 extend essentially perpendicular to one another.

In the embodiment shown in the figures, the first beam plane 76.1, the second beam plane 76.2, the first relay plane 78.1 and the second relay plane 78.2 extend essentially plane-parallel to one another and horizontally. Further in the present embodiment, the first relay plan 78.1 and the second beam plane 76.2 as well as the second relay plane 78.2 and the first beam plane 76.1 are identical. In embodiments not explicitly shown, the relay planes 78.1, 78.2 may also be different with regard to the beam planes 76.1, 76.2.

In **Fig. 7** it is shown that in the present embodiment of the laser system 18, a plane of incidence **92** of the light beam regarding the first deflection element 74.1 and the plane of incidence 92 of the light beam regarding the second deflection element 74.2 define an angle **γ** with the first relay plane 78.1 or with the second relay plane 78.2, respectively, which is different from 90°.

## Claims

1. Laser system (18) for generating a light beam (22), in particular EUV drive laser for generating an excitation light beam for generating an EUV light (16) emitting plasma (43) of a target material, comprising
a) a beam source arrangement (20) for generating the light beam (22),
b) an amplifier arrangement (24) having at least a first and a second optical amplifier (26.1, 26.2) for amplifying the light beam (22) to an amplified light beam (28), each optical amplifier (26.1, 26.2) having a beam input (58) at which the light beam (22) can be input to the respective optical amplifier (26.1, 26.2) and a beam output (60) at which the light beam (22) can be output from the respective optical amplifier (26.1, 26.2),
c) a relay arrangement (62) which has at least one relay unit (64.1, 64.2), the relay unit (64.1, 64.2) comprising a relay unit beam input (66) and a relay unit beam output (68), wherein
- the light beam (22) can be transferred with the relay unit (64.1, 64.2) from the beam output (60) of the first optical amplifier (26.1) to the beam input (58) of the second optical amplifier (26.2),
- the beam output (60) of the first optical amplifier (26.1) and the relay unit beam input (66) form a relay unit input interface (70) and the beam input (58) of the second optical amplifier (26.2) and the relay unit beam output (68) form a relay unit output interface (72),
- a first deflection element (74.1) is arranged at the relay unit input interface (70) and a second deflection element (74.2) is arranged at the relay unit output interface (72), by means of which deflection elements (74.1, 74.2) the light beam (22) can be deflected,
**characterized in that**
d) the relay unit (64.1, 64.2) is configured such that the light beam (22) can be deflected at the first deflection element (74.1) out of a first relay plane (78.1) into a second relay plane (78.2) different from the first relay plane (78.1) and towards the second deflection element (74.2), wherein the relay planes (78.1, 78.2) extend essentially horizontally.

2. Laser system (18) according to claim 1, **characterized in that** the first relay plane /78.1) passes through a deflection region (86) of the first deflection element (74.1) and the second relay plane (78.2) passes through a deflection region (86) of the second deflection element (74.2), wherein the light beam (22) is deflected at the deflection regions (86) when the laser system (18) is in active operation.

3. Laser system (18) according to claim 1 or 2, **characterized in that** a beam path (56), along which the light beam (22) propagates within the laser system (22), runs at least in sections in the first relay plane (78.1) and in the second relay plane (78.2).

4. Laser system (18) according to one of the preceding claims, **characterized in that** the first relay plane (78.1) and the second relay plane (78.2) are spaced apart from one another in the vertical direction (79).

5. Laser system (18) according to one of the preceding claims, **characterized in that** a plane of incidence (92) of the light beam (22) regarding the first deflection element (74.1) and/or a plane of incidence (92) of the light beam (22) regarding the second deflection element (74.2) define an angle (γ) with the first relay plane (78.1) or with the second relay plane (78.2), respectively, which is different from 90°.

6. Laser system (18) according to one of the preceding claims, **characterized in that** a relay unit beam path (80), along which the light beam (22) propagates within the relay unit (64.1, 64.2), extends from the relay unit input interface (70) to the relay unit output interface (72), in particular from the first deflection element (74.1) to the second deflection element (74.2), in particular directly from the first deflection element (74.1) to the second deflection element (74.2), which relay unit beam path (80) defines an angle (α) with the first relay plane (78.1) and/or with the second relay plane (78.2) which is different from 90°.

7. Laser system (18) according to one of the preceding claims, **characterized in that** projections of an incident beam path (88) towards the first deflection element (74.1) and of the relay unit beam path (80) or of an output beam path (90) away from the second deflection element (74.2) and of the relay unit beam path (80) onto the first relay plane (78.1) or the second relay plane (78.2) define an angle which is essentially 90°.

8. Laser system (18) according to claim 3, **characterized in that** the optical amplifiers (26.1, 26.2) each have a first beam plane (76.1) and a second beam plane (76.2) different from the first beam plane (76.1) within which beam planes (76.1, 76.2) the beam path (56) runs at least in sections and within which the light beam (22) can be deflected at least twice by means of deflection elements provided therefore.

9. Laser system (18) according to claim 8, **characterized in that** the first relay plane (78.1), the second relay plane (78.2), the first beam plane (76.1) and/or the second beam plane (76.2) extend plane-parallel to one another.

10. Laser system (18) according to claim 8 or 9, **characterized in that** the first relay plane (78.1) and the second beam plane (76.2) of the first optical amplifier (26.1) and/or the second relay plane (78.2) and the first beam plane (76.1) of the second optical amplifier (26.2) are identical.

11. Laser system (18) according to one of the preceding claims, **characterized in that** the amplifier arrangement (24) comprises at least a third optical amplifier (30) and the relay arrangement (62) comprises at least a second relay unit (64.2), wherein the light beam (22) can be transferred with the first relay unit (64.1) from the beam output (60) of the first optical amplifier (26.1) to the beam input (58) of the second optical amplifier (26.2) and with the second relay unit (64.2) from the beam output (60) of the second optical amplifier (26.2) to the beam input (58) of the third optical amplifier (30).

12. Installation (10) for exposing a semiconductor material (12) coated with a photosensitive coating (14) with ultraviolet light, in particular EUV light (16), **characterized in that** the installation (10) has a laser system (18) according to one of the preceding claims, a focusing unit (34), a beam transport system (36) and a target material generator (38), the laser system (18) being arranged in a first installation region and the focusing unit (34) and the target material generator (38) being arranged in a second installation region, wherein the light beam (22, 28) can be transported from the laser system (18) to the focusing unit (34) by means of the beam transport system (36).

13. Method for generating a light beam (22, 28) for generating a plasma (43) of a target material that emits EUV light (16), **characterized in that** a laser system (18) according to one of claims 1 to 11 is used.

14. Method for producing microchips or semiconductor intermediates for producing microchips, comprising the steps:
a) providing a laser system (18) according to one of claims 1 to 11, a beam transport system (36), a focusing unit (34) and a target material generator (38);
b) generating a light beam (22) by means of the laser system (18) and units (42) of a target material that can be individually excited with the light beam (22) by means of the target material generator (38);
c) transporting the light beam (22) by means of the beam transport system (36) from the laser system (18) to the focusing unit (34) and directing the light beam (22) onto the units (42) of the target material by means of the focusing unit (34) and thereby generating a plasma (43) of the target material that emits EUV light (16);
d) exposing a semiconductor material (12) coated with a photosensitive coating (14) to the EUV light (16) emitted by the plasma (43) of the target material.
